# EUROPÄISCHE PATENTSCHRIFT

(11) **EP 2 342 296 B1**
(45) Veröffentlichungstag und Bekanntmachung des Hinweises auf die Patenterteilung: **28.08.2013**
(21) Anmeldenummer: 09783449.3
(22) Anmeldetag: 28.09.2009
(51) Int. Cl.: C09D 11/02

(54) **VERFAHREN ZUM BEDRUCKEN VON SUBSTRATEN**
METHOD FOR PRINTING SUBSTRATES
PROCÉDÉ D'IMPRESSION DE SUBSTRATS

(30) Priorität: 02.10.2008 EP 08165720
(43) Veröffentlichungstag der Anmeldung: 13.07.2011
(73) Patentinhaber: BASF SE, 67056 Ludwigshafen (DE)
(72) Erfinder: BRUCHMANN, Bernd, 67251 Freinsheim (DE); SCHÖNFELDER, Daniel, B-1000 Bruxelles (BE); DIETSCHE, Frank, 69198 Schriesheim (DE); WAGNER, Eva, 67098 Bad Dürkheim (DE); FEUERHAKE, Robert, 68163 Mannheim (DE); KACZUN, Jürgen, 67157 Wachenheim (DE)
(86) Internationale Anmeldenummer: PCT/EP2009/062481
(87) Internationale Veröffentlichungsnummer: WO 2010/037691

(56) Entgegenhaltungen:
- EP-A- 0 358 087
- WO-A-2006/108832

## Beschreibung

Die vorliegende Erfindung betrifft ein Verfahren zum Bedrucken von Substraten mit einer Druckfarbe oder eines Drucklacks, mindestens umfassend Lösemittel und Bindemittel, wobei es sich bei mindestens einem der Bindemittel um ein Polyetheraminpolyol handelt.

Bei den so genannten mechanischen Druckverfahren wie Offsetdruck, Hochdruck, Flexodruck, Tiefdruck oder Siebdruck wird die Druckfarbe durch den Kontakt einer mit Druckfarbe versehenen Druckform, beispielsweise eine Druckplatte auf den Bedruckstoff übertragen. Druckfarben für diese Anwendungen umfassen üblicherweise Lösemittel, Farbmittel, Bindemittel sowie verschiedene Additive. Drucklacke werden entweder als Grundierung auf den Bedruckstoff aufgetragen (als so genannte "primer") oder nach dem Druckvorgang als Überzug auf den bedruckten Bedruckstoff aufgetragen. Die Auftragung erfolgt üblicherweise in-line mittels eines Lackierwerkes an der Druckmaschine. Drucklacke enthalten kein Farbmittel, sind aber abgesehen davon ähnlich wie Druckfarben formuliert.

Die Art des Trocknens und Aushärtens von Druckfarben richtet sich nach der Art des Bedruckstoffes. Beim Drucken auf saugenden Bedruckstoffen zieht die Druckfarben zumindest teilweise in den Bedruckstoff ein. Beim Drucken auf nicht saugenden Bedruckstoffen, beispielsweise Polymer- oder Metallfolien, kann die Druckfarbe naturgemäß nicht in den Bedruckstoff eindringen, sondern nach dem Abdampfen des Lösungsmittels verbleibt ein getrockneter Film auf dem Bedruckstoff. Druckfarben für derartige Bedruckstoffe müssen daher sehr gute filmbildende Eigenschaften sowie eine ganz besonders gute Haftfestigkeit aufweisen, damit sich der Druckfilm bei mechanischer Beanspruchung nicht wieder vom Untergrund ablöst. Weiterhin sollten Druckfarben auch auf unterschiedlichen Untergründen, beispielsweise polaren Polyamid- oder PET-Folien und unpolaren Polyolefin-Folien gleichermaßen gut haften. Die ist insbesondere dann wichtig, wenn die Druckfarben zur Herstellen von Mehrschichtverpackungen eingesetzt werden sollen.

Mehrschichtmaterialien zum Herstellen von Verpackungen, insbesondere Lebensmittelverpackungen bestehen beispielsweise aus zwei oder mehreren Kunststofffolien, beispielsweise Polyolefinfolien, Metallfolien oder metallisierten Kunststofffolien die, beispielsweise durch Laminieren und mit Hilfe geeigneter Kaschierkleber, miteinander verbunden werden. Bei den Folien kann es sich jeweils um einschichtige, aber auch um mehrschichtige, durch Coextrusion hergestellte Folien handeln. Die Verbunde können noch weitere funktionale Schichten, beispielweise Geruchssperrschichten oder Wasserdampfsperren umfassen. Mehrschichtmaterialien zum Herstellen von Verpackungen sind üblicherweise bedruckt oder beschichtet. Die Druckfarbe kann dabei auf die Oberfläche des Mehrschichtmaterials aufgebracht sein, sie kann sich aber auch zwischen zwei Folien befinden.

Druckfarben mit konventionellen Bindemitteln weisen auf vielen Bedruckstoffen keine ausreichende Haftfestigkeit auf, so dass Haftvermittler wie bestimmte Silane oder Titanate zugegeben werden müssen. Beispielhaft sei hier auf US 5,646,200 verwiesen. Aber selbst bei Zusatz von Haftvermittlern ist die Haftung nicht auf allen Bedruckstoffen befriedigend.

Zu Lösung dieses Problems ist vorgeschlagen worden, hyperverzweigte Polymere als Bindemittel in Druckfarben einzusetzen, wie beispielsweise von WO 02/36695, WO 02/36697, WO 03/93001 und WO 03/93002 offenbart. Die Schriften offenbaren beispielsweise die Verwendung von hyperverzweigten Polyurethanen, hyperverzweigten Polyharnstoffen, hyperverzweigten Polyestern, hyperverzweigten Polyethern, hyperverzweigten Polyaminen, hyperverzweigten Polyamiden, hyperverzweigten Polyesteramiden oder hyperverzweigten Polyetheramiden.

Polyetheraminpolyole sind bekannt. Sie werden aus Trialkanolaminen, wie zum Beispiel Triethanolamin, Tripropanolamin, Triisopropanolamin, gegebenenfalls auch in Mischung mit Mono- oder Dialkanolaminen erhalten, indem diese Monomere unter Katalyse, z. B. saurer oder basischer Katalyse, unter Wassereliminierung verethert werden. Die Herstellung dieser Polymere wird zum Beispiel in US 2,178,173, US 2,290,415, US 2,407,895 und DE 40 03 243 beschrieben. Die Polymerisation kann entweder statistisch erfolgen oder es können Blockstrukturen aus einzelnen Alkanolaminen hergestellt werden, die in einer weiteren Reaktion miteinander verknüpft werden (siehe beispielsweise US 4,404,362).

Die in der Literatur beschriebenen Polyetheraminpolyole werden in freier oder quaternisierter Form zum Beispiel als Demulgatoren für Öl/Wasser-Gemische, als Nachbehandlungsmittel für gefärbte Leder (siehe DE 41 04 834) oder als Schmiermittel für die Metallverarbeitung (siehe CS 265929) eingesetzt. Ihre Verwendung zur Herstellung von Druckfarben ist jedoch bislang noch nicht bekannt.

Unsere ältere Anmeldung EP 07118076.4 offenbart die Verwendung von Polyetheraminpolyolen zum Beschichten von Substraten, beispielsweise von Kunststoff, Holz, Papier, Textilien, Leder oder Metallen. Das Bedrucken von Substraten mit Druckfarben oder Drucklacken ist nicht offenbart.

Der vorliegenden Erfindung lag es als eine Aufgabe zugrunde, verbesserte Druckfarben, insbesondere verbesserte Druckfarben zum Bedrucken von Verpackungen bereit zustellen.

Das Bindemittel für diese verbesserten Druckfarben sollte möglichst wasserlöslich oder wasserdispergierbar sein, eine Glasübergangstemperatur vorzugweise unter Raumtemperatur aufweisen, gute Filmbildeeigenschaften besitzen, sowie verträglich sein mit basischen Komponenten, zum Beispiel mit Polyaminen wie Polyethylenimin.

Dementsprechend wurde Verfahren zum Bedrucken von Substraten gefunden, bei dem man auf eine Druckform eine Druckfarbe oder einen Drucklack, mindestens umfassend Lösemittel und Bindemittel überträgt, die mit der Druckfarbe oder Drucklack versehene Druckform mit einem Substrat in Kontakt bringt und hierdurch die Druckfarbe oder den Drucklack von der Druckform auf das Substrat überträgt, wobei es sich bei mindestens einem der Bindemittel um ein Polyetheraminpolyol mit einem zahlenmittleren Molekulargewicht Mₙ von 500 bis 50000 g/mol handelt, welches neben in das Polymergerüst eingebauten Ethergruppen sowie sekundären und/oder tertiären Aminogruppen, end- und/oder seitenständig weiterhin mindestens fünf funktionelle Gruppen aufweist.

In einer bevorzugten Ausführungsform der Erfindung sind die verwendeten Polyetheraminpolyole durch Kondensieren von mindestens einem Trialkanolamin der allgemeinen Formel N(R¹-OH)₃ (Ia) und/oder mindestens einem Dialkanolamin der allgemeinen Formel R2-N(R¹-OH)₂ (Ib) zu einem Polyetheraminpolyol (II) erhältlich, wobei
- die Reste R¹ unabhängig voneinander für einen zweiwertigen, linearen oder verzweigten aliphatischen Kohlenwasserstoffrest mit 2 bis 6 Kohlenstoffatomen, und
- die Reste R² für Wasserstoff und/oder lineare oder verzweigte aliphatische, cycloalphatische und/oder aromatische Kohlenwasserstoffreste mit 1 bis 30 Kohlenstoffatomen stehen.

In einer bevorzugten Ausführungsform handelt es sich um eine Druckfarbe, welche mindestens ein Farbmittel enthält, bevorzugt um Verpackungsdruckfarben für den Flexo- oder Tiefdruck.

Zu der Erfindung ist im Einzelnen das Folgende auszuführen:
Beschreibung der verwendeten Polyetheraminepolyole

Unter einem hochfunktionellen Polyetheraminpolyol ist im Rahmen dieser Erfindung ein polymeres Produkt zu verstehen, das Ethergruppen und sekundäre und/oder tertiäre Aminogruppen enthält, die jeweils in das Polymergerüst eingebaut sind. Zusätzlich weisen die hochfunktionellen Polyetheraminpolyole end- und/oder seitenständig weiterhin mindestens fünf, bevorzugt mindestens sieben, mehr bevorzugt mindestens zehn funktionelle Gruppen auf. Funktionelle Gruppen sind z. B. Hydroxy- oder Aminogruppen.

Bei den funktionellen Gruppen handelt es sich häufig um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyetheraminpolyole der vorliegenden Erfindung weisen zumeist nicht mehr als 500 end- oder seitenständige funktionelle Gruppen, bevorzugt nicht mehr als 100 end- oder seitenständige funktionelle Gruppen auf.

Die erfindungsgemäß verwendeten Polyetheraminpolyole sind durch eine Kondensationsreaktion erhältlich, bei der man mindestens ein Trialkanolamin der allgemeinen Formel (la) und/oder ein Dialkanolamin der allgemeinen Formel (Ib) sowie optional weitere, mindestens zwei Hydroxy- und/oder Aminogruppen aufweisende Komponenten (Ic) sowie optional weitere Komponenten (Id) in einer Polykondensationsreaktion miteinander zu einem Polyetheraminpolyol (II) umsetzt.

Das erhaltene Polyetheraminpolyol (II) kann optional in einer weiteren Reaktionsstufe modifiziert werden. Es kann beispielsweise alkoxyliert werden oder mit Funktionalisierungsagentien umgesetzt werden.

Die zur Polykondensation eingesetzten Trialkanolamine (Ia) und/oder Dialkanolamine (Ib) weisen die allgemeinen Formeln N(R¹-OH)₃ (Ia) bzw. R²-N(R¹-OH)₂ (Ib) auf.

Bei den Resten R¹ handelt es sich hierbei jeweils unabhängig voneinander um einen zweiwertigen, linearen oder verzweigten aliphatischen Kohlenwasserstoffrest mit 2 bis 6 Kohlenstoffatomen, bevorzugt 2 oder 3 Kohlenstoffatomen. Beispiele derartiger Reste umfassen Ethan-1,2-diyl, Propan-1,3-diyl, Propan-1,2-diyl, 2-Methylpropan-1,2-diyl, 2,2-Dimethylpropan-1,3-diyl, Butan-1,4-diyl, Butan-1,3-diyl (= 1-Methylpropan-1,3-diyl), Butan-1,2-diyl, Butan-2,3-diyl, 2-Methyl-butan-1,3-diyl, 3-Methyl-butan-1,3-diyl (= 1,1-Dimethylpropan-1,3-diyl), Pentan-1,4-diyl, Pentan-1,5-diyl, Pentan-2,5-diyl, 2-Methylpentan-2,5-diyl (= 1,1-Dimethylbutan-1,3-diyl) und Hexan-1,6-diyl. Bevorzugt handelt es sich um Ethan-1,2-diyl, Propan-1,3-diyl oder Propan-1,2-diyl.

Bei dem Rest R² handelt es sich um Wasserstoff und/oder lineare oder verzweigte aliphatische, cycloalphatische und/oder aromatische Kohlenwasserstoffreste mit 1 bis 30 Kohlenstoffatomen, bevorzugt 1 bis 20 Kohlenstoffatomen und besonders bevorzugt 1 bis 10 Kohlenstoffatomen. Aromatische Reste können selbstverständlich auch aliphatische Substituenten aufweisen. Bevorzugte handelt es sich bei R2 um Wasserstoff oder aliphatische Kohlenwasserstoffreste mit 1 bis 4 C-Atomen.

Beispiele bevorzugter Trialkanolamine (Ia) umfassen Triethanolamin, Triisopropanolamin und Tributan-2-olamin oder deren Gemische, besonders bevorzugt ist Triethanolamin und Triisopropanolamin sowie deren Mischungen.

Beispiele bevorzugter Diialkanolamine (Ib) umfassen Diethanolamin, Dipropanolamin, Diisopropanolamin, Dibutanolamin, N-Methyldiethanolamin, N-methyldipropanolamin, N-methyldiisopropanolamin, N,N-bis-(2-hydroxypropyl)-N-methylamin, N,N-bis-(2-hydroxybutyl)-N-methylamin, N-Isopropyldiethanolamin, N-n-Butyldiethanolamin, N-sec-Butyldiethanolamin, N-Cyclohexyldiethanolamin, N-Benzyldiethanolamin, N-4-Tolyldiethanolamin oder N,N-Bis-(2-Hydroxyethyl)-anilin. Besonders bevorzugt ist Diethanolamin, N-Methyldiethanolamin, Dipropanolamin, N-Methyldipropanolamin, Diisopropanolamin und N-methyldiisopropanolamin.

Neben den Trialkanolaminen (Ia) und/oder Dialkanolaminen (Ib) können optional weitere, mindestens zwei Hydroxy- und/oder Aminogruppen aufweisende Komponenten Komponenten (Ic) zur Polykondensation eingesetzt werden.

In einer bevorzugten Ausführungsform handelt es sich bei den Komponenten (Ic) um Polyole der allgemeinen Formel R³(OH)ₙ, wobei n für eine natürliche Zahl von 2 bis 4 steht und R³ für einen n-wertigen linearen oder verzweigten aliphatischen, cycloaliphatischen oder aromatischen Kohlenwasserstoffrest mit 2 bis 10 Kohlenstoffatomen.

Beispiele derartiger Polyole umfassen aliphatische Polyole wie Ethylenglykol, Propylenglykol, Butylenglykol, Glycerin, Tri(hydroxymethyl)ethan, Tri(hydroxymethyl)propan, Sorbitol, Neopentylglykol oder Pentaerythrit, cycloaliphatische Polyole wie 1,4-Dihydroxycyclohexan oder arylaliphatische Polyole wie 1,4-bis-(Hydroxymethyl)benzol. Bevorzugt handelt es sich um Glycerin.

In einer weiteren bevorzugten Ausführungsform handelt es sich bei den Komponenten (Ic) um Polyamine der allgemeinen Formel R⁴(NHR₅)ₘ wobei m für eine natürliche Zahl von 2 bis 4 steht, R⁴ für einen m-wertigen linearen oder verzweigten aliphatischen, cycloaliphatischen oder aromatischen Kohlenwasserstoffrest mit 2 bis 10 Kohlenstoffatomen und die Reste R⁵ unabhängig voneinander für H, einen Kohlenwasserstoffrest der Bedeutung von R² stehen, wobei weiterhin auch zwei Reste R5 zusammen für eine Alkylengruppe, bevorzugt eine lineare 1,ω-Alkylengruppe mit 2 bis 6 Kohlenstoffatomen stehen können. Bevorzugt steht R⁵ für H oder eine Methylgruppe.

Beispiele derartiger Polyamine umfassen Ethylendiamin, N,N'-Dimethylethylendiamin, N,N'-Diethylethylendiamin, 1,2-Diaminopropan, 1,3-Diaminopropan, 1,6-Diaminohexan, 1,2-Diaminocyclohexan, 1,3-Diaminocyclohexan, 1,4-Diaminocyclohexan oder Piperazin.

Sofern vorhanden, werden die mindestens zwei Hydroxy- und/oder Aminogruppen aufweisenden Komponenten (Ic) bevorzugt in einer Menge von nicht mehr als 50 Mol % bezüglich der Gesamtenge aller zur Kondensation eingesetzten Komponenten, also (Ia) und/oder (Ib), (Ic) sowie ggf. (Id) eingesetzt.

Neben den Komponenten (Ia) und/oder (Ib) sowie gegebenenfalls (Ic) können optional auch noch weitere, von (la), (Ib) oder (Ic) verschiedene Komponenten (Id) zur Kondensation eingesetzt werden. Es kann sich hierbei prinzipiell um alle mono- oder polyfunktionellen Verbindungen handeln, welche funktionelle Gruppen aufweisen, die in einer Kondensationsreaktion mit Trialkanolaminen (la) und/oder Dialkanolaminen (Ib) reagieren können. Unter dem Begriff "Kondensation" soll hierbei in üblicher Art und Weise eine Reaktion verstanden werden, bei der zwei funktionelle Gruppen eine kovalente Bindung unter Abspaltung eines kleinen Moleküls, wie insbesondere Wasser bilden. Beispiele von Verbindungen (Id) umfassen Carbonsäuren, insbesondere Dicarbonsäuren, welche mit den Trialkanolaminen (la) und/oder Dialkanolaminen (Ib) Estergruppen ausbilden können. Derartige weitere Komponenten können zur Feinabstimmung der Eigenschaften der erfindungsgemäß verwendeten alkoxylierten Polyalkanolamine eingesetzt werden. Die Menge derartiger weiterer Verbindungen (Ib) sollte aber in der Regel 5 Gew. % bezüglich der Menge von (Ia), (Ib), (Ic) sowie (Id) nicht überschreiten. Bevorzugt beträgt die Menge weniger als 1 Gew. %, besonders bevorzugt weniger als 0,5 Gew. %, und ganz besonders bevorzugt werden keine weiteren Komponenten (Id) zur Kondensation verwendet.

Die Polykondensation der Komponenten (Ia) und/oder (Ib) sowie optional (Ic) oder (Id) kann nach dem Fachmann prinzipiell bekannten Methoden unter Erwärmen der Komponenten durchgeführt werden, wobei Wasser abgespalten wird. Geeignete Methoden sind beispielsweise von EP 441 198 A2 offenbart. Selbstverständlich können jeweils auch Gemische mehrerer verschiedener Komponenten (Ia), (Ib), (Ic) oder (Id) eingesetzt werden.

Die Reaktion kann in Substanz oder auch in einem geeigneten Lösemittel durchgeführt werden. Falls die Reaktion in einem Lösemittel vorgenommen wird, ist es sinnvoll, ein Lösemittel zu verwenden, welches später als Lösemittel in den Druckfarben verwendet werden kann. Bevorzugt wird die Reaktion in Substanz vorgenommen.

Die Kondensation wird üblicherweise bei Temperaturen von 120 bis 280°C, bevorzugt 150 bis 260°C und besonders bevorzugt 180 bis 240°C durchgeführt. Das gebildete Wasser wird bevorzugt abdestilliert. Die Reaktionsdauer beträgt üblicherweise 1 bis 16 h, bevorzugt 2 bis 8 h. Die Kondensationsgrad kann auf einfache Art und Weise durch die Reaktionstemperatur und -zeit kontrolliert werden.

Die Polykondensation wird bevorzugt in Gegenwart einer Säure, bevorzugt phosphorige Säure (H₃PO₃) und/oder hypophosphorige Säure (H₃PO₂) durchgeführt. Bevorzugte Mengen betragen 0,05 bis 2 Gew. %, bevorzugt 0,1 bis 1 Gew. % bezogen auf die zu kondensierenden Komponenten. Es können neben der Säure auch noch zusätzliche Katalysatoren eingesetzt werden, wie beispielsweise Zinkhalogenide oder Aluminiumsulfat, ggf. im Gemisch mit Essigsäure, wie beispielsweise von US 4,505,839 offenbart.

Die Viskosität der erhaltenen Polyetheraminpolyole (II) liegt üblicherweise im Bereich von 1 000 bis 50 000 mPa.s, bevorzugt 2 000 bis 20 000 mPa.s und besonders bevorzugt 3 000 bis 10 000 mPa.s (jeweils am unverdünnten Produkt bei 20 - 60°C gemessen).

Das gewichtsmittlere Molgewicht M_{w} beträgt in der Regel 1.000 und 500.000 g/mol, bevorzugt von 2.000 bis 300.000 g/mol und insbesondere von 5.000 bis 300.000 g/mol.

Das zahlenmittlere Molgewicht Mₙ beträgt 500 und 50.000 g/mol, bevorzugt 1.000 bis 40.000 g/mol, gemessen mittels Gelpermeationschromatographie mit Hexafluorisopropanol als mobiler Phase und Polymethymethacrylat (PMMA) als Standard.

Die OH-Zahl beträgt meist 100 mg KOH/g oder mehr, bevorzugt 150 mg KOH/g oder mehr.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 bis 50 Gew.-%, bevorzugt 0,5 bis 25 Gew.-%, besonders bevorzugt 1 bis 10 Gew.-% bei Temperaturen von beispielsweise 10 bis 100 °C, bevorzugt 20 bis 80 °C und besonders bevorzugt 30 bis 60 °C unterworfen werden.

Gegebenenfalls kann das Reaktionsgemisch auch zur Entfernung von eventuell vorhandenen Ausfällungen filtriert werden. Häufig wird das Produkt gestrippt, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, zum Beispiel Wasser, die als Einsatzstoff verwendeten Aminoalkohole oder leichtflüchtige oligomere oder cyclische Verbindungen destillativ, gegebenenfalls unter Einleitung eines Gases, vorzugsweise Stickstoff, oder Edelgase, gegebenenfalls bei vermindertem Druck, entfernt werden.

### Modifizierte Polyetheraminpolyole

Die wie beschrieben erhaltenen, unmodifizierten Polyetheraminpolyole (II) können optional in weiteren Reaktionsschritten modifiziert werden. Hierbei entstehen modifizierte Polyetheraminpolyole, welche andere funktionelle Gruppen aufweisen, als im ursprünglichen Polyetheraminpolyol (II). Die end- oder seitenständigen OH-Gruppen sowie ggf. vorhandene Aminogruppen reagieren im Zuge der Modifizierung mit geeigneten Funktionaliserungsagentien. Hierdurch können die Eigenschaften der Polyetheraminpolyole verändert und an einen gewünschten Zweck angepasst werden.

Beispielweise können die unmodifizierten Polyetheramine in prinzipiell bekannter Art und Weise alkoxyliert werden.

Es können hierzu C₂- bis C₁₂-Alkylenoxide eingesetzt werden. Bevorzugt werden Ethylenoxid und/oder Propylenoxid eingesetzt. Höhere Alkylenoxide werden im Regelfalle allenfalls in geringen Mengen zur Feinsteuerung der Eigenschaften eingesetzt. In der Regel beträgt die Menge an Ethylenoxid und/oder Propylenoxid mindestens 80 Gew. %, bevorzugt 95 Gew. % und besonders bevorzugt 95 Gew. % bezüglich der Summe aller eingesetzten Alkylenoxide.

Der durchschnittliche Alkoxylierungsgrad kann beispielsweise 1 bis 100, bevorzugt 5 bis 50 Alkyleneinheiten pro OH-Gruppe und -sofern vorhanden- pro sekundärer Aminogruppe im Ausgangsprodukt der Alkoxylierung, also dem Polyetheraminpolyol (II) betragen.

In einer weiteren Ausführungsform der Erfindung können die unmodifizierten Polyetheraminpolyole (II) können auch optional in einem weiteren Reaktionsschritt funktionalisiert werden. Hierzu können die in den Polyetheraminpolyolen (II) vorhandenen Hydroxygruppen und/oder Aminogruppen mittels geeigneter Agentien, welche zur Reaktion mit Hydroxygruppen und/oder Aminogruppen befähigt sind, umgesetzt werden.

Beispielsweise kann man die im vorhandenen tertiären Aminogruppen protonieren oder mittels geeigneter Alkylierungsagentien quaternisieren.

Die endständigen oder seitenständigen Hydroxylgruppen können mit geeigneten Reagenzien zur Derivatisierung umgesetzt werden. Je nach Funktionalisierungsagens kann man das Kettenende hydrophobieren oder stärker hydrophilieren.

Die Hydroxylgruppen können beispielsweise mit Schwefelsäure oder Derivaten davon verestert werden, so dass Produkte mit Sulfatgruppen entstehen. Analog können mit Phosphorsäure, phosphoriger Säure, Polyphosphorsäure, POCl₃ oder P₄O₁₀ phosphorhaltige Gruppen aufweisende Produkte erhalten werden.

Die Hydroxygruppen können auch mit Carbonsäuren verestert werden. Zur Veresterung können beispielsweise Monocarbonsäuren wie Dodecansäure, Hexadecansäure, Octadecansäure oder 9-Dodecensäure eingesetzt werden. Insbesondere geeignet zur Veresterung sind auch ethylenisch ungesättigte Carbonsäuren, wie beispielsweise (Meth)acrylsäure. Hierbei werden Polymere mit end-oder seitenständigen vernetzbaren Gruppen erhalten. Weiterhin können die Hydroxygruppen beispielsweise auch verethert werden.

### Druckfarben

Erfindungsgemäß werden die Polyetheraminpolyole zur Herstellung von Druckfarben und/oder Drucklacken verwendet.

Bei der Druckfarbe kann es sich im Prinzip im alle Arten von Druckfarben für mechanische Druckverfahren handeln, also Verfahren bei denen die Druckfarbe durch Kontakt einer Druckform auf den Bedruckstoff übertragen wird. Beispiele umfassen Druckfarben für den Offsetdruck, Hochdruck, Flexodruck, Tiefdruck oder Siebdruck. Der Begriff "Druckfarbe" soll Drucklacke mit umfassen. Bei der Druckform kann es sich beispielsweise um Druckplatten handeln oder um Runddruckformen, auch Sleeves genannt.

Die Druckfarben umfassen in prinzipiell bekannter Art und Weise mindestens ein Lösemittel, ein Farbmittel, ein Bindemittel sowie optional weitere Additive. Erfindungsgemäß handelt es sich bei mindestens einem der Bindemittel um ein Polyetheraminpolyol. Es kann sich hierbei um unmodifizierte Polyetheraminpolyole (II) oder auch um modifizierte Polyetheraminpolyole handeln. Bevorzugt werden unmodifizierte Polyetheraminpolyole eingesetzt. Selbstverständlich kann auch ein Gemisch mehrerer verschiedener Polyetheraminpolyole eingesetzt werden. Neben dem mindestens einen Polyetherpolyaminpolyol können selbstverständlich noch weitere Bindemittel eingesetzt werden. In der Regel beträgt das Verhältnis der Mengen der Polyetheraminpolyole zu der Gesamtmenge aller eingesetzten Bindemittel 0,1 bis 1, bevorzugt 0,3 bis 1, besonders bevorzugt 0,4 bis 1, ganz besonders bevorzugt 0,5 bis 1 und beispielsweise 0,7 bis 1. In einer weiteren Ausführungsform der Erfindung können als Bindemittel auch ausschließlich Polyetheraminpolyole eingesetzt werden.

Bevorzugt handelt es sich bei den Druckfarben um Flexodruck-, Tiefdruck oder Siebdruckfarben und besonders bevorzugt um Verpackungsdruckfarben für den Flexodruck oder Tiefdruck. Der Begriff Verpackungsdruckfarben ist selbsterklärend und beschränkend zugleich. Bei Verpackungsdruckfarben handelt es sich um dünnflüssige, schnell trocknende Druckfarben. Sie enthalten dementsprechende relativ niedrig siedende Lösemittel, deren Siedepunkt im Regelfalle nicht mehr als 140°C beträgt. Siebdruckfarben sind ähnlich formuliert wie Flexo- oder Tiefdruckfarben, sie sind lediglich etwas viskoser eingestellt und weisen üblicherweise Lösemittel mit etwas höheren Siedepunkten auf.

Beispiele weiterer Bindemittel für Verpackungsdruckfarben umfassen Polyvinylbutyral, Nitrocellulose, Polyamide, Polyacrylate oder Polyacrylat-Copolymere. Besonders vorteilhaft hat sich die Kombination der Polyetheraminpolyole mit Nitrocellulose erwiesen.

Die Gesamtmenge aller Bindemittel in der Druckfarbe, besonders der Verpackungsdruckfarbe beträgt üblicherweise 5 - 35 Gew. %, bevorzugt 6 - 30 Gew. % und besonders bevorzugt 10 - 25 Gew. % bezüglich der Summe alle Bestandteile. Das Verhältnis der Mengen von Polyetheraminpolyolen zu der Gesamtmenge aller Bindemittel liegt üblicherweise zwischen 0,3 bis 1, bevorzugt 0,4 bis 1, mit der Maßgabe, dass die Menge an Polyetheraminpolyolen im Regelfalle 3 Gew. %, bevorzugt 4 Gew. % und besonders bevorzugt 5 Gew. % bezüglich der Summe aller Bestandteile der Druckfarbe nicht unterschreiten sollte.

Es kann ein einzelnes Lösungsmittel oder auch ein Gemisch mehrerer Lösemittel eingesetzt werden. Als Lösemittel prinzipiell geeignet sind die üblichen Lösemittel für Verpackungsdruckfarben. Insbesondere geeignet als Lösemittel für die erfindungsgemäß verwendeten Druckfarben sind Alkohole wie beispielsweise Ethanol, 1-Propanol, 2-Propanol, Ethylenglykol, Propylenglykol, Diethylenglykol, substituierte Alkohole wie beispielsweise Ethoxypropanol, Ester wie beispielsweise Ethylacetat, Isopropylacetat, n-Propyl oder n-Butylacetat. Als Lösungsmittel ist weiterhin Wasser prinzipiell geeignet. Besonders bevorzugt als Lösemittel ist Ethanol bzw. Gemische, die zu einem überwiegenden Teil aus Ethanol bestehen. Unter den prinzipiell möglichen Lösemitteln trifft der Fachmann je nach den Löslichkeitseigenschaften des Polyharnstoffes und der gewünschten Eigenschaften der Druckfarbe eine geeignete Auswahl. Es werden üblicherweise 40 bis 80 Gew. % Lösemittel bezüglich der Summe aller Bestandteile der Druckfarbe eingesetzt.

Als Farbmittel können die üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin- oder Isoindolin-Pigmente. Es können selbstverständlich auch Gemische verschiedener Farbstoffe oder Farbmittel eingesetzt werden sowie außerdem lösliche organische Farbstoffe. Es werden üblicherweise 5 bis 25 Gew. % Farbmittel bezüglich der Summe aller Bestandteile eingesetzt.

Die Polyetheraminpolyole umfassenden Druckfarben, insbesondere die Polyetheraminpolyole umfassenden Verpackungsdruckfarben können optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureeseter oder Ester der Adipinsäure. Zum Dispergieren der Pigmente können Dispergierhilfsmittel eingesetzt werden. Bei der erfindungsgemäßen Druckfarbe kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew. % bezüglich der Summe aller Bestandteile der Druckfarbe und beträgt bevorzugt 0 -10 Gew. %.

Es kann sich selbstverständlich auch um UV-härtbare Druckfarben handeln. Hierbei setzt man Bindemittel mit UV-härtbaren Gruppen, z.B. Acrylatgruppen ein. Bei derartigen Bindemitteln kann es sich beispielsweise um modifizierte Polyetheraminpolyole handeln, welche vernetzbare Gruppen aufweisen. Polyetheraminpolyole mit vernetzbaren Gruppen können beispielsweise durch teilweise Veresterung end- oder seitenständiger OH-Gruppen unmodifizierter Polyetheraminpolyole mit (Meth)acrylsäure erhalten werden. Es können aber auch Polyetheraminpolyole ohne vernetzende Gruppen im Gemisch mit anderen, vernetzende Gruppen aufweisenden Bindemitteln eingesetzt werden.

Als Lösemittel in UV-vernetzbaren Druckfarben fungieren üblicherweise Reaktivverdünner, beispielsweise Acrylate wie n-Butylacrylat oder 2-Ethylhexylacrylat oder Vinylether wie beispielsweise Ethylvinylether oder n-Butylvinylether.

Die Herstellung der Druckfarbe kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten und einem Teil des Lösemittels hergestellt, die später mit weiteren Bestandteilen und weiterem Lösemittel zur fertigen Druckfarbe weiter verarbeitet wird.

Drucklacke werden zum Überlackieren von Drucken verwendet, wobei Drucklacke im Gegensatz zu anderen Lacken mittels Drucktechnik unter Verwendung spezieller Druckplatten, so genannter Lackplatten, aufgetragen werden. Drucklacke enthalten naturgemäß keine Farbmittel, weisen aber abgesehen davon die gleichen Bestandteile auf wie die bereits geschilderten Druckfarben. Die Mengen der übrigen Komponenten erhöhen sich dementsprechend. Die Gesamtmenge aller Lösemittel in einem erfindungsgemäß verwendeten Drucklack beträgt üblicherweise 40 bis 90 Gew. %, und die Gesamtmenge aller Bindemittel beträgt üblicherweise 5 - 40 Gew. %, bevorzugt 6 - 35 Gew. % und besonders bevorzugt 10 - 30 Gew. % bezüglich der Summe alle Bestandteile. Das Verhältnis der Mengen von Polyetheraminpolyolen zu der Gesamtmenge aller Bindemittel liegt üblicherweise zwischen 0,3 bis 1, bevorzugt 0,4 bis 1, mit der Maßgabe, dass die Menge an Polyetheraminpolyolen im Regelfalle 3 Gew. %, bevorzugt 4 Gew. % und besonders bevorzugt 5 Gew. % bezüglich der Summe aller Bestandteile des Drucklacks nicht unterschreiten sollte.

### Druckverfahren

Die Polyetheraminpolyole enthaltenden Druckfarben und Drucklacke können zum Bedrucken von Substraten, auch Bedruckstoffe genannt, aller Art verwendet werden, beispielsweise zum Bedrucken von Papier, Kartonagen, Metall- oder Kunststofffolien. Bevorzugt können sie zum Bedrucken von Metall- oder Kunststofffolien verwendet werden.

Zu nennen sind beispielsweise Polyolefin-Folien wie Folien aus Polyethylen, Polypropylen oder Poly(4-Methyl-1-penten) oder Polystyrol. Bei Polyethylen-Folien kann es sich um Folien aus HDPE, LDPE oder LLDPE handeln. Es kann sich auch um Copolymere wie beispielsweise um Folien aus Ethylen-Vinylacetat-Copolymeren, EthylenAcrylsäure-Copolymeren oder Styrol/Butadien-Copolymeren handeln. Weiterhin können Folien aus PVC oder Polycarbonaten eingesetzt werden. Weiterhin können Folien aus polaren Materialien eingesetzt werden, beispielsweise Cellophan-Folien, Polyester-Folien, wie beispielsweise solche aus Polyethylenterephthalat, Polybutylenterephthalat oder Polyethylennaphthalat oder Polyamid-Folien, wie beispielsweise Folien aus PA 6, PA 12, PA 6/66, PA 6/12 oder PA 11.

Bevorzugt handelt es sich bei den Bedruckstoffen um Folien aus Polyethylen, Polypropylen, Polystyrol, Polyester- oder Polyamid, ganz besonders bevorzugt sind PET-, PEN- oder Polyamid-Folien.

Als Metallfolien zu nennen sind insbesondere Aluminiumfolien eingesetzt, es kann sich beispielsweise aber auch um Zinnfolien, Titanfolien, Kupferfolien oder Goldfolien handeln.

Die Polyetheraminpolyole umfassenden Druckfarben können auf übliche Art und Weise verdruckt werden. Hierzu können übliche Druckformen, insbesondere übliche Flexodruckformen, Tiefdruckformen oder Siebdruckformen sowie die entsprechenden Druckmaschinen verwendet werden.

Beim erfindungsgemäßen Verfahren zum Bedrucken von Substraten trägt man zunächst die Druckfarbe auf die verwendete Druckform auf. Dies erfolgt üblicherweise mittels eines geeigneten Farbwerks in der Druckmaschine. Dem Fachmann sich geeignete Farbwerke sowie deren Verwendung bekannt. Danach wird die Druckform mit dem zu bedruckenden Substrat bzw. dem Bedruckstoff in Kontakt gebracht und hierdurch die Druckfarbe von der Druckform auf das Substrat übertragen.

Das Trocknen der Drucke erfolgt in üblicher Art und Weise durch Abdampfen des Lösemittels oder im Falle von strahlungshärtbaren Druckfarben durch entsprechende Strahlung.

Für den Mehrfarbdruck können die Substrate in prinzipiell bekannter Art und Weise in mehreren Farbwerken nacheinander bedruckt werden. Die erhaltenen Drucke können nach dem Druck in ebenfalls bekannter Art und Weise mit einem Lack beschichtet werden. Vorteilhaft kann es sich hierbei um einen Lack handeln, welcher als Bindemittelkomponente ebenfalls ein Polyetheraminpolyol umfasst. Bei dem Lack kann es sich insbesondere um einen Drucklack handeln, insbesondere die bereits erwähnten, Polyetheraminpolyole umfassenden Drucklacke. Drucklacke können bevorzugt mittels eines Lackwerkes aufgebracht werden; selbstverständlich sind aber auch andere Methoden der Aufbringung denkbar.

Die mit den Polyetheraminpolyole umfassenden Druckfarben erhaltenen Druckschichten weisen eine hervorragende Haftung sowohl auf polaren wie unpolaren Substraten auf. Darüber hinaus wirken die Polyetheramine aber auch als Hilfsmittel zur Rheologiesteuerung.

Die nachfolgenden Beispiele sollen die Erfindung näher erläutern:

### Beispiel 1: Herstellung eines hyperverzweigten Polyetheramin-Polyols

In einem 4 L HWS-Gefäß mit Rührer, Innenthermometer, Stickstoffeinleitungsrohr und absteigendem Kühler mit Auffanggefäß wurden 2800,0 g Triethanolamin und 18,8 g hypophosphorige Säure (50% in Wasser) als Katalysator vorgelegt. Das Gemisch wurde unter leichtem Stickstoffstrom und Rühren langsam auf 230 °C erhitzt und für 6 h bei diesen Bedingungen gehalten, wobei ein wässriges Destillat in Mischung mit niedermolekularen Stickstoff-haltigen Verbindungen überging. Nach dem Abscheiden von 412 g Destillat wurde das Reaktionsgemisch auf 140 °C abgekühlt und bei dieser Temperatur für 10 min durch Anlegen eines Vakuums von 50 mbar von flüchtigen Bestandteilen befreit.

Das erfindungsgemäß zu verwendende Polymer wurde in Form einer dunkel gelb gefärbten, viskosen Flüssigkeit erhalten.

Das Polyetheraminpolyol wurde per Gelpermeationschromatographie mit einem Refraktometer als Detektor analysiert. Als mobile Phase wurde Hexafluorisopropanol (HFIP) verwendet, als Standard zur Bestimmung des Molekulargewichts wird Polymethylmethacrylat (PMMA) eingesetzt.

Mn = 5500 g/mol; Mw = 26000 g/mol.
Die OH-Zahl, gemessen nach DIN 53240, Teil 2, ergab 416 mg KOH/g Polymer.

### Beispiel 2: Polyvinylbutyral -Druckfarbe mit hyperverzweigtem Polyetheramin-Polyol als Additiv

### Ausgangsmaterialien:

### Druckfarbe:

Als Ausgangsmaterial für den Test wurde eine handelsübliche Flüssigdruckfarbe auf Basis von Polyvinylbutyral für den Flexo- bzw. Tiefdruck eingesetzt (Multilam® PA-O, Fa. Flint).

### Additive:

Additiv 1: Handelsübliches Polyethylenimin (Lupasol^{®} WF BASF SE; 50%ig in Ethanol),
Additiv 2: Polyetheramin gemäß Beispiel 1 (50%ig in Ethanol)

### Herstellung der Druckfarben :

Die PVB Druckfarbe wurde im Verhältnis 1 : 4 mit wasserfreiem Ethanol verdünnt. Ausgehend von dieser Mischung wurden folgende Proben hergestellt:
P1 = Druckfarbenlösung additiviert mit 3 Gew% Additiv 1
P2 = Druckfarbenlösung additiviert mit 3 Gew% Additiv 2

### Viskositätstests:

Es wurde die der Einfluss der Additive 1 und 2 auf die Viskosität der Druckfarbe bestimmt.

Die Viskosität wird mit Hilfe am Brookfield-Viskosimeter entsprechend DIN 53018 verfolgt. Die Untersuchungen wurden bei RT durchgeführt. Die Viskositäten der frisch angesetzten Druckfarbenproben P1 und P2 wurden direkt nach dem Ansetzen bestimmt. Nach drei Tagen Lagerung bei RT wird eine weitere Viskositätsmessung durchgeführt.

### Ergebnisse:

| | Brookfield Viskosität [mPas]* | |
|---|---|---|
| | t = 0 | t = 3 d |
| Druckfarbe P1 | 75 | 436 |
| Druckfarbe P2 | 47 | 225 |

## Patentansprüche

1. Verfahren zum Bedrucken von Substraten, bei dem man auf eine Druckform eine Druckfarbe oder einen Drucklack, mindestens umfassend Lösemittel und Bindemittel überträgt, die mit der Druckfarbe oder Drucklack versehene Druckform mit einem Substrat in Kontakt bringt und hierdurch die Druckfarbe oder den Drucklack von der Druckform auf das Substrat überträgt, **dadurch gekennzeichnet, dass** es sich bei mindestens einem der Bindemittel um ein Polyetheraminpolyol mit einem zahlenmittleren Molekulargewicht Mₙ von 500 bis 50000 g/mol handelt, welches neben in das Polymergerüst eingebauten Ethergruppen sowie sekundären und/oder tertiären Aminogruppen, end- und/oder seitenständig weiterhin mindestens fünf funktionelle Gruppen aufweist.

2. Verfahren gemäß Anspruch 1, **dadurch gekennzeichnet, dass** die Polyetheraminpolyole durch Kondensieren von mindestens einem Trialkanolamin der allgemeinen Formel N(R¹-OH)₃ (Ia) und/oder mindestens einem Dialkanolamin der allgemeinen Formel R²-N(R1-OH)₂ (Ib) zu einem Polyetheraminpolyol (II) erhältlich sind, wobei
• die Reste R¹ unabhängig voneinander für einen zweiwertigen, linearen oder verzweigten aliphatischen Kohlenwasserstoffrest mit 2 bis 6 Kohlenstoffatomen, und
• die Reste R² für Wasserstoff und/oder lineare oder verzweigte aliphatische, cycloalphatische und/oder aromatische Kohlenwasserstoffreste mit 1 bis 30 Kohlenstoffatomen stehen.

3. Verfahren gemäß Anspruch 2, **dadurch gekennzeichnet, dass** es sich bei (la) um mindestens ein Trialkanolamin ausgewählt aus der Gruppe von Triethanolamin, Triisopropanolamin und Tributan-2-olamin handelt.

4. Verfahren gemäß Anspruch 2 oder 3, **dadurch gekennzeichnet, dass** man die Kondensation unter saurer oder basischer Katalyse bei einer Temperatur von 150 bis 300° C durchführt.

5. Verfahren gemäß einem der Ansprüche 1 bis 4, **dadurch gekennzeichnet, dass** das Verhältnis der Mengen der Polyetheraminpolyole zu der Gesamtmenge aller eingesetzten Bindemittel 0,1 bis 1 beträgt.

6. Verfahren gemäß einem der Ansprüche 1 bis 5, **dadurch gekennzeichnet, dass** es sich um eine Druckfarbe handelt, welche zusätzlich mindestens ein Farbmittel umfasst.

7. Verfahren gemäß Anspruch 6, dass es sich bei der Druckfarbe um Flexodruck-, Tiefdruck oder Siebdruckfarben handelt.

8. Verfahren gemäß Anspruch 6, dass es sich bei der Druckfarbe um Verpackungsdruckfarben für den Flexo- oder Tiefdruck handelt.

9. Verfahren gemäß Anspruch 8, **dadurch gekennzeichnet, dass** die Verpackungsdruckfarbe 40 bis 80 Gew. % Lösemittel, 5 bis 35 Gew. % Bindemittel sowie 5 bis 25 Gew. % Farbmittel umfasst, wobei das Verhältnis der Mengen der Polyetheraminpolyole zu der Gesamtmenge aller eingesetzten Bindemittel 0,3 bis 1 beträgt, mit der Maßgabe, dass mindestens 3 Gew. % mindestens eines Polyetheraminpolyols bezüglich der Summe aller Komponenten der Verpackungsdruckfarbe enthalten sind.

10. Verfahren gemäß einem der Ansprüche 1 bis 9, **dadurch gekennzeichnet, dass** es sich bei dem Substrat um eine Kunststoff- oder Metallfolie handelt.

11. Verfahren gemäß einem der Ansprüche 1 bis 9, **dadurch gekennzeichnet, dass** es sich bei dem Substrat um eine Polyethylen-, Polypropylen-, Polyester- oder Polyamidfolie handelt.

## Claims

1. A method for printing substrates which comprises transferring a printing ink or a printing varnish at least comprising solvents and binders to a printing form, contacting a substrate with the inked or varnished printing form and thereby transferring the printing ink or the printing varnish from the printing form to the substrate, wherein at least one of the binders comprises a polyetheramine polyol having a number average molecular weight Mₙ in the range from 500 to 50 000 g/mol, said polyetheramine polyol in addition to ether groups and also secondary and/or tertiary amino groups incorporated in the polymer scaffold further includes at least five functional groups disposed terminally and/or laterally.

2. The method according to claim 1 wherein the polyetheramine polyol is obtainable by condensing at least one trialkanolamine of the general formula N(R¹-OH)₃ (Ia) and/or at least one dialkanolamine of the general formula R²-N(R1-OH)₂ (Ib) to form a polyetheramine polyol (II), wherein
• the R¹ radicals are each independently a divalent, linear or branched aliphatic hydrocarbyl radical having 2 to 6 carbon atoms, and
• the R² radicals are hydrogen and/or linear or branched aliphatic, cycloaliphatic and/or aromatic hydrocarbyl radicals having 1 to 30 carbon atoms.

3. The method according to claim 2 wherein (Ia) comprises at least one trialkanolamine selected from the group consisting of triethanolamine, triisopropanolamine and tributan-2-olamine.

4. The method according to claim 2 or 3 wherein the condensation is conducted under acidic or basic catalysis at a temperature in the range from 150 to 300°C.

5. The method according to any one of claims 1 to 4 wherein the ratio of the amount of polyetheramine polyol to the total amount of all binders used is in the range from 0.1 to 1.

6. The method according to any one of claims 1 to 5 utilizing a printing ink further comprising at least one colorant.

7. The method according to claim 6 wherein the printing ink comprises flexographic, gravure or screen printing inks.

8. The method according to claim 6 wherein the printing ink comprises packaging printing inks for flexographic or gravure printing.

9. The method according to claim 8 wherein the packaging printing ink comprises 40% to 80% by weight of solvent, 5% to 35% by weight of binder and also 5% to 25% by weight of colorant, wherein the ratio of the amounts of polyetheramine polyol to the total amount of all binders used is in the range from 0.3 to 1, with the proviso that at least 3% by weight of at least one polyetheramine polyol based on the sum total of all the components in the packaging printing ink is present.

10. The method according to any one of claims 1 to 9 wherein the substrate comprises polymeric film or metal foil.

11. The method according to any one of claims 1 to 9 wherein the substrate comprises polyethylene, polypropylene, polyester or polyamide film.

## Revendications

1. Procédé pour l'impression de substrats, dans lequel on transfère sur une planche d'impression une encre ou une laque d'impression, comprenant au moins un solvant et un liant, on met en contact la planche d'impression pourvue de l'encre ou de la laque d'impression avec un substrat et on transfère de ce fait l'encre ou la laque d'impression de la planche d'impression sur le substrat, **caractérisé en ce qu'**il s'agit, pour ledit au moins un liant, d'un polyétheraminepolyol présentant un poids moléculaire numérique moyen Mₙ de 500 à 50 000 g/mole, qui présente, en plus des groupes éther incorporés dans la structure polymère ainsi que les groupes amino secondaires et/ou tertiaires, en position terminale et/ou latérale en outre au moins cinq groupes fonctionnels.

2. Procédé selon la revendication 1, **caractérisé en ce que** les polyétheraminepolyols peuvent être obtenus par condensation d'au moins une trialcanolamine de formule générale N(R¹-OH)₃ (Ia) et/ou d'au moins une dialcanolamine de formule générale R²-N (R¹-OH) ₂ (Ib) en un polyétheraminepolyol (II), où
- les radicaux R¹ représentent, indépendamment l'un de l'autre, un radical hydrocarboné divalent, linéaire ou ramifié, aliphatique, comprenant 2 à 6 atomes de carbone, et
- les radicaux R² représentent hydrogène et/ou des radicaux hydrocarbonés linéaires ou ramifiés, aliphatiques, cycloaliphatiques et/ou aromatiques comprenant 1 à 30 atomes de carbone.

3. Procédé selon la revendication 2, **caractérisé en ce qu'**il s'agit, pour (Ia), d'au moins une trialcanolamine choisie dans le groupe formé par la triéthanolamine, la triisopropanolamine et la tributan-2-olamine.

4. Procédé selon la revendication 2 ou 3, **caractérisé en ce qu'**on réalise la condensation sous catalyse acide ou basique à une température de 150 à 300°C.

5. Procédé selon l'une quelconque des revendications 1 à 4, **caractérisé en ce que** le rapport des quantités des polyétheraminepolyols à la quantité totale de tous les liants utilisés est de 0,1 à 1.

6. Procédé selon l'une quelconque des revendications 1 à 5, **caractérisé en ce qu'**il s'agit d'une encre d'impression qui comprend en outre au moins un colorant.

7. Procédé selon la revendication 6, **caractérisé en ce qu'**il s'agit, pour l'encre d'impression, d'encres pour flexographie, pour héliogravure ou pour sérigraphie.

8. Procédé selon la revendication 6, **caractérisé en ce qu'**il s'agit, pour l'encre d'impression, d'encres d'impression d'emballages pour la flexographie ou la sérigraphie.

9. Procédé selon la revendication 8, **caractérisé en ce que** l'encre d'impression d'emballages comprend 40 à 80% en poids de solvant, 5 à 35% en poids de liant ainsi que 5 à 25% en poids de colorant, le rapport des quantités de polyétheraminepolyols à la quantité totale de tous les liants utilisés valant 0,3 à 1, sous réserve qu'au moins 3% en poids d'au moins un polyétheraminepolyol par rapport à la somme de tous les composants de l'encre d'impression d'emballages sont contenus.

10. Procédé selon l'une quelconque des revendications 1 à 9, **caractérisé en ce qu'**il s'agit, pour le substrat, d'une feuille en matériau synthétique ou en métal.

11. Procédé selon l'une quelconque des revendications 1 à 9, **caractérisé en ce qu'**il s'agit, pour le substrat, d'une feuille en polyéthylène, en polypropylène, en polyester ou en polyamide.
